# EUROPÄISCHE PATENTSCHRIFT

(11) **EP 0 997 910 B1**
(45) Veröffentlichungstag und Bekanntmachung des Hinweises auf die Patenterteilung: **14.02.2007**
(21) Anmeldenummer: 99203528.7
(22) Anmeldetag: 25.10.1999
(51) Int. Cl.: G11B 27/11, G11B 27/10, G11B 19/02, G11B 27/36

(54) **Gerät zum Abspielen von auf einer optischen Informationsplatte digital gespeicherten Informationen**
Apparatus for playback of digitally recorded information from an optical information disc
Appareil de reproduction d'information numérique enregistrée sur un disque optique

(30) Priorität: 30.10.1998 DE 19850018
(43) Veröffentlichungstag der Anmeldung: 03.05.2000
(73) Patentinhaber: Koninklijke Philips Electronics N.V., 5621 BA Eindhoven (NL)
(72) Erfinder: Smelt, Gerardus J.A., 52064 Aachen (DE)
(74) Vertreter: Volmer, Georg

(56) Entgegenhaltungen:
- EP-A- 0 910 088
- EP-A- 0 961 279
- WO-A-92/05553
- WO-A-98/09290
- US-A- 5 365 502
- US-A- 5 617 535

## Beschreibung

Die Erfindung bezieht sich auf ein Gerät zum Abspielen von auf einer optischen Informationsplatte digital gespeicherten Informationen, aufweisend
- eine Steuerschaltung, mittels derer die Darstellung und/oder Wiedergabe von Informationen, insbesondere Audio- und/oder Video-Informationen, auswählbar und/oder steuerbar ist,
- einen Parameter-Speicher zum Speichern von Navigations-Parametern während des Abspielens einer Informationsplatte.

Ein derartiges Gerät ist beispielsweise aus der WO 98/09290 bekannt. Dieses bekannte Gerät ist zum Abspielen digitaler Video-Informationsplatten vorgesehen. Zur Steuerung der Darstellung des Audio- und/oder Video-Programms weist das bekannte Gerät Navigations-Kommandos und Navigations-Patameter auf.
Als Navigations-Parameter werden allgemein diejenigen Parameter bezeichnet, deren Information von dem Abspielgerät wenigstens während des Abspielvorganges gespeichert wird. Die Navigations-Parameter umfassen üblicherweise Parameter, denen eine vorgegebene Funktion zugeordnet ist und auch Parameter, die frei von dem Provider nutzbar sind und beispielsweise verwendbar sind, um das Verhalten des Abspielgerätes zu modifizieren oder um die von einem Benutzer durchgeführten Operationen, Entscheidungen und/oder Wünsche aufzuzeichnen.
Navigations-Kommandos und Navigations-Parameter bilden die Grundlage für Provider von Informationsplatten, um verschiedene Titel-Strukturen zu erstellen. Die Provider können die Navigations-Kommandos und die Navigations-Parameter nutzen, um den Status des Abspielgerätes einzustellen bzw. zu verändern, beispielsweise zur Implementierung eines Eltern-Management-Systems, welches Kindern den Zugriff zu vorgebbaren Video-Programmen vorenthält.

Mittels der Navigations-Kommandos und der Navigations-Parameter kann der Provider einfache und komplexe Verzweigungsstrukturen in einem Titel definieren.
Die Navigations-Parameter von Informationsplatten gemäß dem DVD-Video-Standard werden zu Beginn und zu Ende eines Abspielvorganges einer Informationsplatte auf Null gesetzt. Die Navigations-Parameter von Informationsplatten gemäß dem HQ-Video-CD (High-Quality-Video-Compact-Disc) - Standard sind zu Beginn und am Ende des Abspielvorganges jeweils undefiniert.

Die WO92/05553A beschreibt ein Wiedergabe- und Reproduktionsgerät für Informationen, bei dem Bildwiedergabeeinstellungen auf einem Datenträger gespeichert werden, wobei die Wiedergabeeinstellungen für die Bildverarbeitung der Bilddaten benötigt werden. Die Wiedergabeeinstellungen werden zusammen mit einem Datenträgeridentifikationscode in einem nichtflüchtigen Speicher des Wiedergabegerätes gespeichert, wenn der Speicherplatz auf dem Datenträger zu gering ist oder es sich um einen einmal beschreibbaren Datenträger handelt.

Es ist Aufgabe der Erfindung, ein Gerät der eingangs genannten Art zu schaffen, welches eine Auswertung der Abspielvorgänge von Informationsplatten ermöglicht.

Diese Aufgabe wird erfindungsgemäß durch die Merkmale des unabhängigen Anspruchs gelöst.

Die nichtflüchrige Speicherung der zeitlichen Abfolgen der Navigationsparameter ermöglicht es, die zeitliche Historie der Veränderung der Navigations-Parameter von einem oder von mehreren Abspielvorgängen dem Benutzer des Gerätes elektronisch zur Verfügung zu stellen. Dies ermöglicht eine einfache Auswertung und Analyse eines oder mehrerer Abspielvorgänge von Informationsplatten anhand der zeitlichen Veränderung der Navigations-Parameter. Mittels der aufgezeichneten Navigations-Parameter läßt sich somit das Verhalten des Benutzers während des Abspielvorganges der Informationspaltte analysieren.

Gemäß der vorteilhaften Ausgestaltung der Erfindung nach Anspruch 2 weist das Gerät ein Schnittstelle auf, mittels derere die in dem ersten nichtflüchtigen Speicher gespeicherten Navigations-Parameter aus dem Gerät auslesbar sind. Als Schnittstelle ist beispielsweise eine RS-232-Schnittstelle realisierbar. Die mittels der Schnittstelle ausgelesenen Navigations-Parameter lassen sich dann beispielsweise mittels eines Computers weiterverarbeiten und analysieren.

Die vorteilhafte Ausgestaltung der Erfindung stellt eine besonders einfache Möglichkeit der Realisierung des ersten nichtflüchtigen Speichers dar, da die einzelnen Speicherfelder des ersten nichtflüchtigen Speichers nicht mit jeweils einer einzelnen Adresse versehen sein müssen. Die Navigations-Parameter werden zeitlich seriell in den ersten nichtflüchtigen Speicher eingeschrieben. Mit jedem neuen Einschreibvorgang werden die bereits gespeicherten Navigations-Parameter jeweils einen Speicherplatz weiter nach unten geschoben, während die neu zu speichernden Navigations-Parameter im obersten Speicherfeld des ersten nichtflüchtigen Speichers abgespeichert werden. Die sich im untersten Speicherfeld des ersten nichtflüchtigen Speichers befindlichen Navigations-Parameter werden vorzugsweise beim nächsten Einschreibevorgang gelöscht. Dadurch werden bei einem ersten nichtflüchtigen Speicher mit N-Speicherplätzen für Navigations-Parameter jeweils die letzten N-Navigations-Parameter abgespeichert.

Gemäß der vorteilhaften Ausgestaltung der Erfindung nach Anspruch 3 sind die einzelnen Speicherfelder des ersten nichtflüchtigen Speichers einzeln adressierbar. Bei einem derartigen Speicher können die Navigations-Parameter mittels Adreß-Zeigern in den mit Adressen versehenen Speicherfeldern gespeichert werden. Das Speichern neuer Navigations-Parameter und das Löschen alter Navigations-Patameter kann mittels eines Software-Algorithmus implementiert werden. Ein derartiger Speicher hat den Vorteil, daß bei dem Abspeichern neuer Navigations-Parameter nur jeweils ein Speicherfeld des ersten nichtflüchtigen Speichers verändert werden muß.

Die zeitliche Abfolge des Abspeicherns der Navigations-Parameter in dem ersten nichtflüchtigen Speicher kann vorzugsweise gemäß Anspruch 4 erfolgen. Je nach Applikation und Wunsch, des Benutzers können jedoch auch andere Zeitpunkte oder Ereignisse definiert werden, zu denen eine Speicherung der Navigations-Parameter erfolgt.

Gemäß der vorteilhaften Ausgestaltung der Erfindung nach Anspruch 5 ist neben dem ersten nichtflüchtigen Speicher ein zweiter nichtflüchtiger Speicher vorgesehen, in dem ebenfalls Navigations-Parameter speicherbar sind. In dem zweiten nichtflüchtigen Speicher werden die Navigations-Parameter bei der Speicherung mit einer Informationsplattenidentifizierungsinformation, beispielsweise einer Informationsplattenidentifizierungsnummer, versehen, diese Informationsplattenidentifizierungsnummer ermöglicht eine eindeutige Zuordnung der Navigations-Parameter zu der zugehörigen Informationsplatte. Der zweite nichtflüchtigt Speicher ist vorzugsweise dazu vorgesehen, Endresultate, d.h. die letzten aktuellen Navigations-Parameter eines Abspielvorganges, abzuspeichern. Damit ist ein. Informationsaustausch zwischen verschiedenen Abspielvorgängen möglich. Der Informationsaustausch kann dabei zwischen verschiedenen Abspielvorgängen ein- und derselben Informationsplatte erfolgen. Ferner ist es möglich, die Navigations-Parameter des Abspielvorganges einer ersten Informationsplatte für den Abspielvorgang einer zweiten Informationsplatte zu nutzen. Dies ist insbesondere für Serien von Informationsplatten vorteilhaft z.B. für einen Lernkursus mit mehreren Informationsplatten.

Zu Beginn eines Abspielvorganges einer Informationsplatte ist mittels der Steuerschaltung überprüfbar, ob die jeweilige Informationsplatte mit einer Informationsplattenidentifizierungsinformation versehen ist. Weist die jeweilige Informationsplatte eine Informationsplattenidentifizierungsinformation auf, so überprüft die Steuerschaltung, ob zu dieser Informationsplattenidentifizierungsinformation. korrespondierende Navigations-Parameter in dem ersten nichtflüchtigen Speicher abgespeichert sind. Ist dies der Fall, so können die Navigations-Parameter aus dem zweiten nichtflüchtigen Speicher ausgelesen, in den Parameter-Speicher eingeschrieben und für den nachfolgenden Abspielvorgang der Informationsplatte genutzt werden. Als Parameter-Speicher kann sowohl ein RAM-Speicher als auch ein Register-Speicher verwendet werden.

Die Erfindung ist gemäß Anspruch 6 insbesondere- für Geräte gemäß dem DVD (Digital Video Disc)-Standard geeignet. Gemäß dem DVD-Standard sind als Navigations-Parameter 16 Allgemeine Parameter (General-Parameter) vorgesehen, welche eine Länge von jeweils 2 Bit aufweisen. Diese allgemeinen Parameter stehen den Providern von Informationsplatten zur Verfügung, um das Bedienverhalten des Benutzers zu speichern und um das Verhalten des Abspielgerätes zu beeinflussen bzw. zu steuern. Auf die allgemeinen Parameter kann mittels Navigations-Kommandos zugegriffen werden. Mittels der Speicherung der Allgemeinen Parameter in dem ersten und/oder dem zweiten nichtflüchtigen Speicher lassen sich Information eines Abspielvorganges einer Informationsplatte abspeichern. Diese Informationen können für einen späteren Abspielvorgang derselben Informartionsplatte oder auch für einen späteren Abspielvorgang einer anderen Informationsplatte aus dem zweiten nichtflüchtigen Speicher geladen und für den späteren Abspielvorgang als Basis genutzt werden.

Gemäß Anspruch 7 ist das erfindungsgemäße Gerät insbesondere für Geräte gemäß dem HQ-Video-CD-Standard (High Quality Video Compact Disc) geeignet. Gemäß dem HQ-Video-CD-Standard sind als Navigations-Parameter wenigstens 16 Benutzer-Parameter (User-Parameter) von jeweils 2 Bit vorgesehen. Gemäß der Erfindung sind diese Benutzer-Parameter sowohl in dem ersten als auch in dem zweiten nichtflüchtigen Speicher speicherbar.

Die Speicherung der zeitlichen Abfolge der Navigations-Parameter kann vorzugsweise zu Analyse des Benutzerverhaltens von Informationsplatten-Applikationen verwendet werden. Insbesondere ist es bei Lern- bzw. Lehr-Informationsplatten für die Hersteller von Bedeutung, wie sich der Benutzer während des Abspielvorganges dieser Informationsplatten verhält. Beispielsweise kann mittels der Abspeicherung der Navigations-Paramerter in dem ersten nichtflüchtigen Speicher analysiert werden, welche Module des Lehr- bzw. Lern-Programmes in welcher Häufigkeit und welcher Abfolge benutzt werden. Mittels Auswertung dieser Daten von einer Vielzahl von Benutzern kann das entsprechende Lern- bzw Lehr-Program, welches auf der jeweiligen. Informationsplatte gespeichert ist, verbessert wenden.

Als weitere vorteilhafte Anwendungsmöglichkeit bietet sich die Analyse des Benutzerverhaltens von Geräten an, welche als Informationssysteme z.B. in Kaufhäusern oder öffentlichen Ämtern aufgestellt sind. In dem ersten nichtflüchtigen Speicher lassen sich beispielsweise die Anzahl der Benutzer, das Spektrum der Fragen der Benutzer und Ähnliches abspeichern. Diese Informationen lassen sich später beispielsweise zu Marketing-Zwecken auswerten.

Als weitere vorteilhafte Anwendungsmöglichkeit bietet sich die Fehlersuche beispielsweise bei neuen Informationsplatten-Applikationen an. Falls die auf der Informationsplatte gespeicherte Applikation noch Fehler bzw. Mängel aufweist, lassen sich diese anhand der in dem ersten nichtflüchtigen Speicher gespeicherten Navigations-Parameter leicht identifizieren und beseitigen.

Der Aufbau des ersten nichtflüchtigen Speichers läßt sich auf vielfältige Art und Weise realisieren und kann den jeweiligen Bedürfnissen des Benutzers angepaßt werden. Die in dem ersten nichtflüchtigen Speicher gespeicherten Informationen können ebenfalls mit einer Informationsplattenidentifizierungsinformation versehen werden. Dadurch lassen sich auch die zeitlichen Abfolgen der Navigations-Parameter jeweils einer oder verschiedenen Informationsplatten zuordnen.

Einige Ausführungsbeispiele der Erfindung werden nachfolgend anhand der Zeichnung in den Fig. 1 bis 4 näher erläutert. Es zeigen:
Fig. 1 ein Blockschaltbild eines erfindungsgemäßen Gerätes zum Abspielen von auf einer optischen Informationsplatte digital gespeicherten Informationen,
Fig. 2 die Speicherorganisation für die Navigations-Parameter mit einem Registerspeicher, einem nichtflüchtigen Adreßspeicher und einem nichtflüchtigen seriellen Pufferspeicher,
Fig. 3 ein Flußablaufdiagramm des Einlesevorganges einer Informationsplatte des DVD-Standards,
Fig. 4 ein Flußablaufdiagramm des Abspeicherns der allgemeinen Parameter in dem Adreßspeicher und/oder dem seriellen Pufferspeicher während eines Abspielvorganges einer DVD-Informationsplatte.

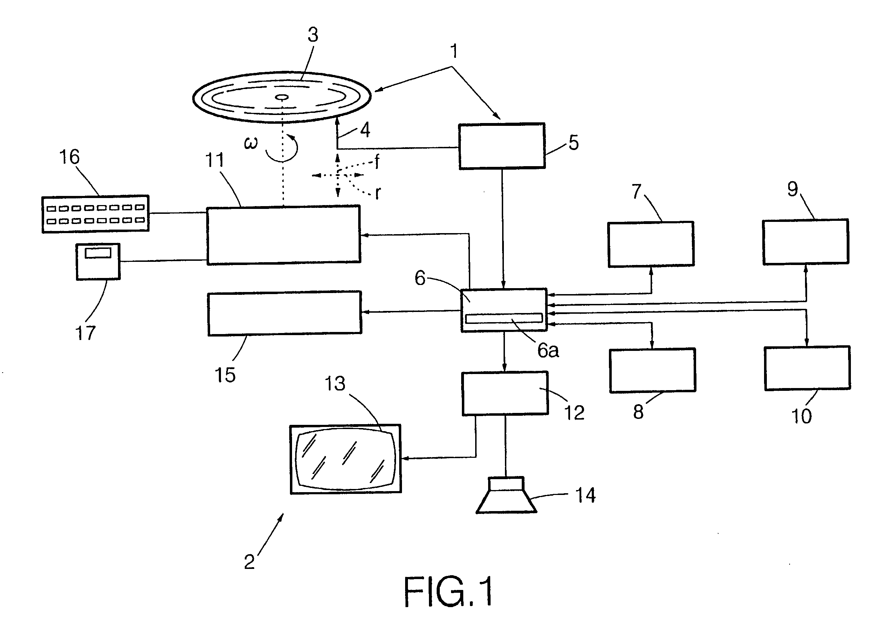

Fig. 1 zeigt ein optisches Plattenspieler-System 1 mit einem optischen Plattenspieler 2, der zum Abspielen von auf einer optischen Informationsplatte 3 digital gespeicherten Informationen vorgesehen ist. Als optische Informationsplatte 3 ist insbesondere eine Informationsplatte gemäß dem DVD-Standard oder eine Informationsplatte gemäß dem HQ-Video-CD-Standard vorgesehen. Die auf der optischen Informationsplatte 3 digital gespeicherten Informationen werden mittels einer optischen Leseeinheit 4 ausgelesen und an eine Dekodierschaltung 5 übertragen. Die Dekodierschaltung 5 ist ferner zur Fehlerkorrektur vorgesehen. Die dekodierten und fehlerkorrigierten Daten werden an eine Steuerschaltung 6 übertragen.

Die Steuerschaltung 6 ist mit einem RAM-Speicher 7, einem ROM-Speicher 8, einem zweiten nichtflüchtigen Speicher 9 und einem ersten nichtflüchtigen Speicher 10 gekoppelt. Der RAM-Speicher 7 und der ROM-Speicher 8 sind dazu vorgesehen, um den Datenstrom, welcher der Steuerschaltung 6 von der Dekodierschaltung 5 zugeführt wird, zu steuern und zu verarbeiten. Der zweite nichtflüchtige Speicher 9 und der erste nichtflüchtige Speicher 10 sind zum nichtflüchtigen Speichern von Navigations-Parametern vorgesehen. Die Steuerschaltung ist ferner mit einem Servo-System 11 gekoppelt, welches die Winkelgeschwindigkeit ^{ω} der optischen Informationsplatte sowie die Position der optischen Leseeinheit 4 hinsichtlich der Spuren der optischen Informationsplatte 3 steuert. Dies ist durch den gestrichelten Pfeil r angedeutet. Ferner steuert das Servo-System 11 die Fokussierung der optischen Leseeinheit 4, was durch den gestrichelten Pfeil f angedeutet ist. Die Steuerschaltung 6 übermittelt an das Servo-System 11 diesbezügliche Steuersignale.

Ferner ist die Steuerschaltung 6 mit einer Dekodierschaltung 12 gekoppelt. Die Dekodierschaltung 12 ist dazu vorgesehen, die beispielsweise nach dem MPEC 2-Standard kodierten Video- und Audiodaten zu dekodieren. Die Dekodierschaltung 12 liefert die dekodierten Videodaten an ein Display 13 und die dekodierten Audiodaten an einen Lautsprecher bzw. ein Lautsprechersystem 14. Zum bidirektionalen Datenaustausch mit externen Komponenten weist der optische Plattenspieler 2 ein bidirektionales Interface 15 auf. An das bidirektionale Interface 15 lassen sich eine Tastatur 16, ein externer Datenspeicher 17, wie z.B. ein Diskettenlaufwerk, sowie weitere externe Komponenten anschließen. Über das bidirektionale Interface 15 können einerseits externe Daten, die beispielsweise über die Tastatur 16 eingegeben werden, an den optischen Plattenspieler 2 übertragen werden. Andererseits können interne Daten von dem optischen Plattenspieler 2 an externe Komponenten übertragen werden, wie z.B. an den externen Datenspeicher 17.

Die Steuerschaltung 6 weist intern ein Register 6a auf, welches imstande ist, Informationen vorübergehend zu speichern und mit kurzer Zugriffszeit abzugeben.

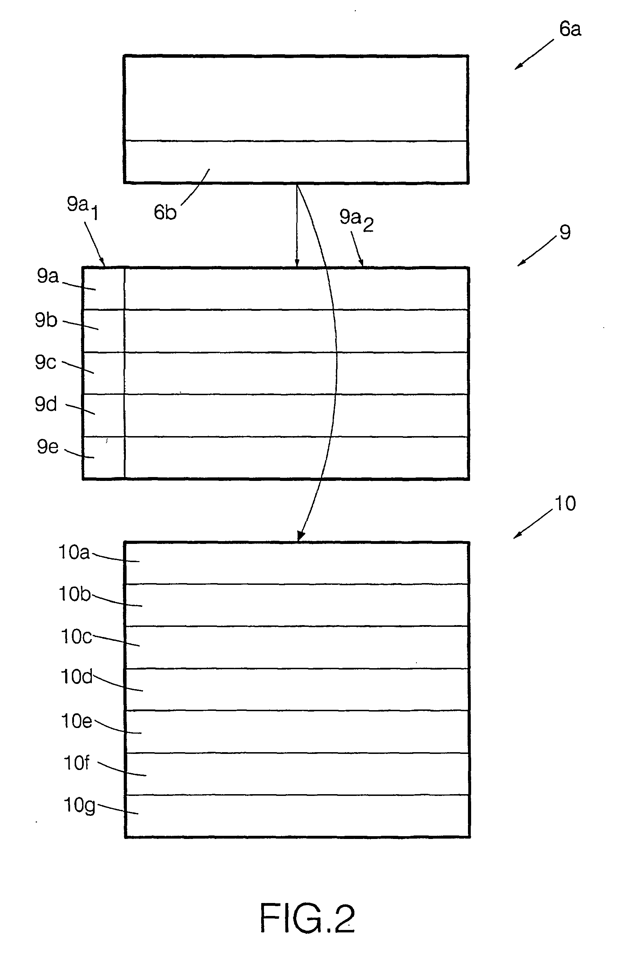

Fig. 2 zeigt beispielhaft eine genauere Darstellung des Registers 6a, des zweiten nichtflüchtigen Speichers 9 und des ersten nichtflüchtigen Speichers 10 gemäß Fig. 1. Die in der Fig. 2 dargestellten Speicherelemente sind für Geräte gemäß dem DVD-Standard dimensioniert. Gemäß dem DVD-Standard stehen als Navigations-Parameter 16 allgemeine Parameter zur Verfügung, welche jeweils eine Länge von 2 Byte aufweisen. Diese allgemeinen Parameter stehen den Providern von optischen Informationsplatten standardmäßig zur Verfügung, um beispielsweise das Bedienverhalten des Benutzers zu speichern und/oder um das Verhalten des jeweiligen Abspielgerätes zu beeinflussen bzw. zu steuern. Das Register 6a weist ein Speicherfeld 6b von 32 Byte auf, welches als Parameter-Speicher zur Speicherung der allgemeinen Parameter vorgesehen ist. Der zweite nichtflüchtige Speicher 9 weist im vorliegenden Beispiel fünf Speicherfelder 9a bis 9e von jeweils 34 Byte auf. Die einzelnen Speicherfelder 9a bis 9e weisen Informationsplattenidentfizierungsfelder 9a₁, 9b₁, 9c₁, 9d₁ und 9e₁ von jeweils 2 Byte auf sowie Navigations-Parameterfelder 9a₂, 9b₂, 9c₂, 9d₂ und 9e₂ von jeweils 32 Byte auf. Die Navigations-Parameterfelder 9a₂ bis 9e₂ sind zum Speichern der allgemeinen Parameter des DVD-Standards vorgesehen. Die Informationsplattenidentfizierungsfelder 9a₁ bis 9e₁ sind jeweils zur Speicherung einer Informationsplattenidentifizierungsnummer vorgesehen, welche eine Zuordnung zwischen den abgespeicherten allgemeinen Parametern und der jeweiligen zu diesen allgemeinen Parametern korrespondierenden Informationsplatte ermöglichen. Der erste nichtflüchtige Speicher 10 ist als serieller, zyklischer Pufferspeicher ausgebildet. Er weist im folgenden Beispiel sieben Speicherfelder 10a, 10b, 10c, 10d, 10e, 10f und 10g auf, welche jeweils 32 Byte umfassen. Der erste nichtflüchtige Speicher 10 ist dazu vorgesehen, eine zeitliche Abfolge der allgemeinen Navigations-Parameter zu speichern. Im vorliegenden Beispiel weist der erste nichtflüchtige Speicher keine Informationsplattenidentifizierungsfelder auf, um Speicherplatz zu sparen und den Speicher möglichst einfach zu realisieren. Es ist jedoch auch möglich, mehrere serielle zyklische Speicher vorzusehen und diese jeweils mit einem Informationsplattenidentifizierungsfeld zu versehen, um auch von verschiedenen Informationsplatten zeitlich serielle Abfolgen der allgemeinen Navigations-Parameter speichern zu können. Die Speicherfelder 9a bis 9e des zweiten nichtflüchtigen Speichers 9 lassen sich jeweils einzeln adressieren. Der erste nichtflüchtige Speicher 10 hat nur eine gemeinsame Speicheradresse. Neu zu speichernde Navigations-Parameter werden immer jeweils zunächst in das oberste Speicherfeld 10a des ersten nichtflüchtigen Speichers 10 eingeschrieben. Bei dem darauffolgenden Speichervorgang werden die neuen Navigations-Parameter in dem obersten Speicherfeld 10a gespeichert und die sich bereits in dem ersten nichtflüchtigen Speicher 10 befindlichen Navigations-Parameter werden jeweils ein Speicherfeld weiter nach unten geschoben, d.h. die Navigations-Parameter des Speicherfeldes 10a in das Speicherfeld 10b, die Navigations-Parameter des Speicherfeldes 10b in das Speicherfeld 10c usw. Die in dem untersten Speicherfeld 10g gespeicherten Navigations-Parameter werden bei einem nachfolgenden erneuten Speichervorgang gelöscht. Somit befinden sich in dem ersten nichtflüchtigen Speicher 10 jeweils die letzten sieben gespeicherten allgemeinen Navigations-Parameter.

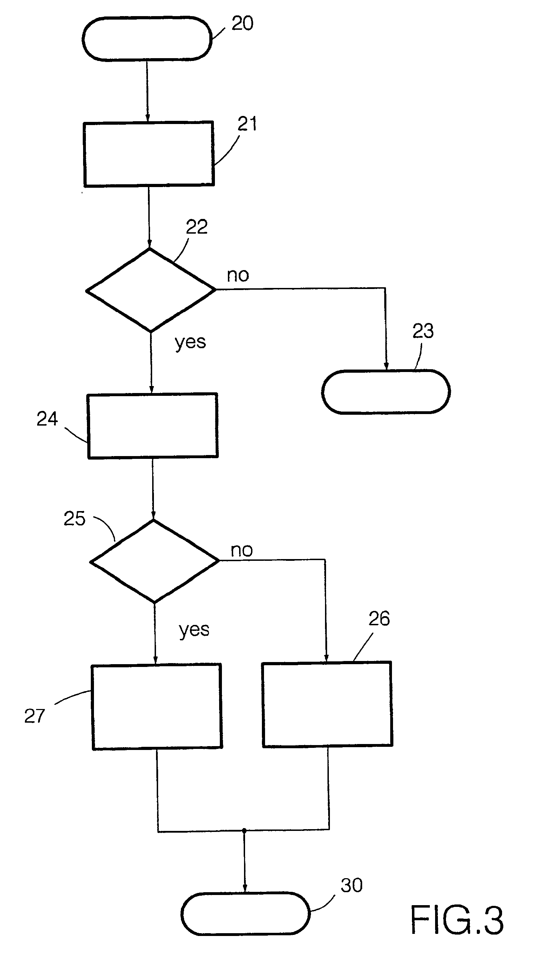

Fig. 3 zeigt ein prinzipielles Flußablaufdiagramm des Einlesevorganges einer Informationsplatte des DVD-Standards. Dieser Einlesevorgang wird immer dann ausgeführt, wenn eine Informationsplatte 3 in den optischen Plattenspieler 2 eingebracht wird.

Ein erster Block 20 repräsentiert das Ereignis "Informationsplatte-Ein", d.h. daß eine optische Informationsplatte 3 in den optischen Plattenspieler 2 gemäß Fig. 1 eingebracht wird. Danach wird in einem Block 21 eine Provider-ID eingelesen. Die Provider-ID ist eine Kennzeichnungsinformation, die auf einer definierten Stelle der DVD-Informationsplatte standardmäßig gespeichert ist. Anhand der Provider-ID wird in einem nachfolgenden Schritt 22 geprüft, ob der optische Plattenspieler 2 gemäß dem DVD-Standard arbeiten soll oder ob gemäß der Provider-ID ein nicht standardmäßiges Verhalten von dem Provider gewünscht wird. Hierzu werden in dem Block 22 die letzten vier Buchstaben der Provider-ID überprüft. Weisen diese letzten vier Buchstaben eine bestimmte Buchstabenkombination auf, z.B. die Buchstabenkombination GRPM, so erkennt der optische Plattenspieler 2, daß von dem Provider ein nicht- standardmäßiges Verhalten des Abspielvorganges, d.h. eine nichtflüchtige Speicherung der allgemeinenen Navigationsparameter, vorgesehen ist.

Gemäß dem DVD-Standard werden die allgemeinen Navigations-Parameter zu Beginn und bei Ende eines jeden Abspielvorganges gleich Null gesetzt. Daher ist es bei standardmäßigem Verhalten des DVD-Gerätes nicht möglich, Daten bezüglich eines Abspielvorganges einer CD zu speichern und für spätere Abspielvorgänge zur Verfügung zu stellen. Diese Möglichkeit wird mit dem nicht standardmäßigen Verhalten des optischen Plattenspielers 2 eröffnet. Sind die letzten vier Buchstaben der Provider-ID ungleich GRPM, so schaltet der optische Plattenspieler auf das standardmäßige DVD-Verhalten, was in Fig. 3 durch den Block 23 dargestellt ist. Sind die letzten vier Buchstaben der Provider-ID gleich GRPM, so erkennt der optische Plattenspieler, daß er nicht gemäß dem DVD-Standard arbeiten soll, d.h., daß die allgemeinen Parameter nicht zu Beginn und am Ende eines Abspielvorganges zu Null gesetzt werden sollen. In dem Block 24 wird daher zunächst eine Informationsplattenidentifizierungsnummer von der Informationsplatte gelesen. Diese Informationsplattenidentifizierungsnummer ist an einer definierten Stelle der Informationsplatte gespeichert. In einem nachfolgenden Schritt 25 wird überprüft, ob die Informationsplattenidentifizierungsnummer dem optischen Plattenspieler bekannt ist, d.h., ob unter dieser Informationsplattenidentifizierungsnummer schon allgemeine Navigations-Parameter in dem zweiten nichtflüchtigen Speicher 9 gespeichert sind. Ist dies nicht der Fall, so wird die eingelesene Informationsplattenidentifizierungsnummer in einem Schritt 26 in eines der Informationsplattenidentifizierungsfelder 9a₁ bis 9e₁ eingeschrieben und das zugeordnete Speicherfeld somit für die Speicherung der zugeordneten Navigationsparameter initialisiert. Hierzu wird eines der Speicherfelder 9a bis 9e ausgewählt, welches noch nicht belegt ist. Sind bereits alle Speicherfelder 9a bis 9e mit Informationen belegt, so wird das Speicherfeld mit der ältesten Information gelöscht und für die neue Informationsplattenidentifizierungsnummer zur Verfügung gestellt. Gleichzeitig wird der Zugriffspfad zu dem vorgesehenen Speicherfeld eingerichtet.

Wird in dem Block 25 festgestellt, daß die Informationsplattenidentifizierungsnummer bekannt ist und zu dieser Informationsplattenidentifizierungsnummer allgemeine Navigations-Parameter in dem zweiten nichtflüchtigen Speicher 9 gespeichert sind, so wird in einem Schritt 27 der Zugriffspfad zu demjenigen Speicherfeld der Speicherfelder 9a bis 9e eingerichtet, in dem die der jeweiligen Informationsplattenidentifizierungsnummer zugeordnetem allgemeinen Navigations-Parameter gespeichert sind.

In dem sich anschließenden Abspielvorgang, dargestellt durch den Block 30, stehen nun die bei Ende des vorherigen Abspielvorganges der Informationsplatte gespeicherten allgemeinen Navigations-Parameter zur Verfügung.

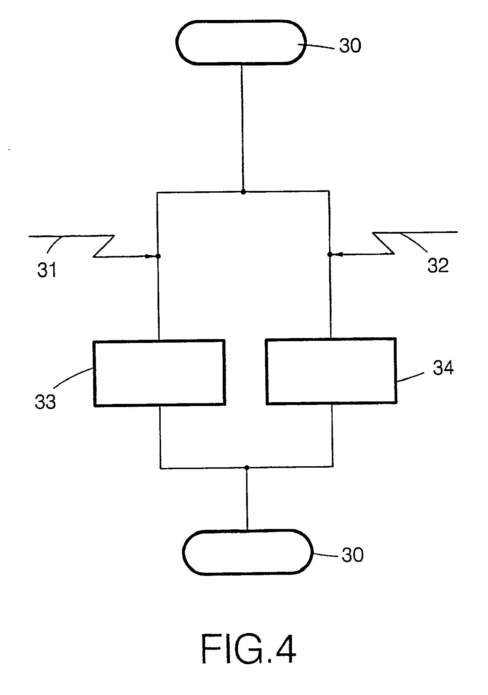

Fig. 4 zeigt ein Flußablaufdiagramm des Abspeicherns der allgemeinen Parameter in dem zweiten nichtflüchtigen Speicher 9 und in dem ersten nichtflüchtigen Speicher 10 sowie des Ladens der allgemeinen Parameter aus dem zweiten nichtflüchtigen Speicher 9 während eines Abspielvorganges einer DVD-Informationsplatte, wobei das Abspeichern und das Laden mittels der Steuerschaltung 6 gesteuert wird. Zunächst befindet sich der optische Plattenspieler 2 hinsichtlich des zweiten nichtflüchtigen Speichers 9 und des ersten nichtflüchtigen Speichers 10 in einem Wartezustand 30. Während dieses Wartezustandes 30 findet ein Abspielvorgang der optischen Informationsplatte 3 statt, d.h. der Steuerschaltung 6 werden mittels der optischen Leseeinheit 4 und der Dekodierschaltung 5 kontinuierlich Informationen zugeführt. Entsprechend den der Steuerschaltung 6 zugeführten Informationen können sich auch die in dem Speicherfeld 6b des Registers 6a gespeicherten allgemeinen Navigations-Parameter ändern. Die Änderung der allgemeinen Navigations-Parameter ist davon abhängig, auf welche Art und Weise der Provider der Informationsplatte von den allgemeinen Navigations-Parametern Gebrauch macht. Der Provider der Informationsplatte kann durch entsprechende Programmablaufstrukturen auf der Informationsplatte bestimmen, wann bzw. unter welchen Bedingungen die allgemeinen Navigations-Parameter aus dem Register 6a in den ersten nichtflüchtigen Speicher 9 und/oder den zweiten nichtflüchtigen Speicher 10 geschrieben werden sollen. Hierfür sind zwei spezifische Kommandos vorgesehen, welche von der Steuerschaltung 6 erkannt werden. Als erstes Steuerkommando ist eine Addition des Wertes Null zu dem Speicherfeld 6b des Registers 6a vorgesehen. Eine derartige Addition des Wertes Null ändert nichts an dem Speicherfeld 6b des Registers 6a. Allerdings erkennt die Steuerschaltung 6, daß ein derartiger, das Register 6a nicht beeinflussender Steuerbefehl in dem von der Informationsplatte 3 gelieferten Datenstrom vorhanden war. Dieses Ereignis "Addition von Null zu dem Speicherfeld 6b des Registers 6a" ist in dem Flußablaufdiagramm gemäß Fig. 4 als 31 bezeichnet. Tritt dieses Ereignis 31 auf, so speichert die Steuerschaltung 6 die in dem Speicherfeld 6b des Registers 6a gespeicherten allgemeinen Parameter in dem zweiten nichtflüchtigen Speicher 9 unter der jeweiligen Informationsplattenidentifizierungsnummer sowie gleichzeitig in dem obersten Speicherfeld 10a des ersten seriellen nichtflüchtigen Speichers 10. Dies ist in Fig. 4 als Block 33 dargestellt. Nach Durchführung dieser Speicherung geht der optische Plattenspieler 2 erneut in den Wartezustand 30. Als weiterer Steuerbefehl bezüglich des ersten nichtflüchtigen Speichers 9 ist der Steuerbefehl "Subtrahiere Null von den in dem Speicherfeld 6b gespeicherten allgemeinen Navigations-Parametern". Dieses Ereignis ist in dem Flußablaufdiagramm gemäß Fig 4 als 32 bezeichnet. Der Wert der in dem Speicherfeld 6b gespeicherten allgemeinen Navigations-Parameter wird durch diesen Befehl "Subtrahiere Null" ebenfalls nicht verändert. Die Steuerschaltung 6 erkennt jedoch, wenn sich ein derartiger Befehl in dem von der optischen Informationsplatte 3 ausgelesenem Datenstrom befindet. Bei Erkennung dieses Steuerbefehls lädt die Steuerschaltung 6 die allgemeinen Navigations-Parameter aus dem zweiten nichtflüchtigen Speicher 9 in das Speicherfeld 6b des Registers 6a. Danach geht das System bezüglich der Speicheroperationen des zweiten nichtflüchtigen Speichers 9 und des ersten nichtflüchtigen Speichers 10 wieder in den Wartezustand 30 über.

Die in dem zweiten nichtflüchtigen Speicher 9 sowie dem ersten nichtflüchtigen Speicher 10 gespeicherten allgemeinen Navigations-Parameter können mittels des bidirektionalen Interfaces 15 sowohl von extern ausgelesen als auch von extern verändert werden. Zum externen Auslesen kann eine externe Datenverarbeitungseinheit, beispielsweise ein Computer, verwendet werden. Zur externen Beeinflussung sind beispielsweise ein Pager, eine Tastatur, ein Bar-Codeleser und ein externer Timer denkbar.

Mit dem erfindungsgemäßen System ist es somit möglich, Resultate eines Abspielvorganges einer Informationsplatte in dem zweiten nichtflüchtigen Speicher 9 bzw. dem ersten nichtflüchtigen Speicher 10 zu speichern und für spätere Abspielvorgänge zur Verfügung zu stellen. Ferner ist es mittels des ersten nichtflüchtigen Speichers 10 möglich, zeitliche Abfolgen der Veränderung der allgemeinen Navigations-Parameter aufzuzeichnen, über das bidirektionale Interface 15 auszulesen und dann mittels externer Datenverarbeitungseinheiten auszuwerten.

Außerdem ist es mittels des bidirektionalen Interfaces möglich, Informationen für das Abspielen einer Informationsplatte extern in den zweiten nichtflüchtigen Speicher 9 einzuschreiben und das Abspielen der Informationsplatte dadurch von extern zu beinflussen und zu steuern.

## Patentansprüche

1. Gerät zum Abspielen von auf einer optischen Informationsplatte digital gespeicherten Informationen, umfassend:
eine Steuerschaltung (6), mittels derer die Wiedergabe von Informationen, vorzugsweise Audio- und/oder Videoinformationen, auswählbar und/oder steuerbar ist,
einen Speicher zum Speichern von Navigations-Parametern während des Abspielens einer Informationsplatte, und
einen ersten nichtflüchtigen Speicher (10), der mittels der Steuerschaltung (6) steuerbar ist,
**dadurch gekennzeichnet, dass**
die Navigations-Parameter Navigationsinformationen enthalten, die von Gerät während eines Abspielvorgangs gespeichert werden, wobei der erste nichtflüchtige Speicher (10) als serieller, zyklischer Pufferspeicher ausgebildet ist, in den zeitliche Abfolgen der Navigations-Parameter seriell eingeschrieben werden.

2. Gerät nach Anspruch 1, **dadurch gekennzeichnet, dass** eine Schnittstelle (15) zum Auslesen der zeitlichen Abfolgen der Navigations-Parameter aus dem ersten nichtflüchtigen Speicher (10) vorgesehen ist.

3. Gerät nach Anspruch 1, **dadurch gekennzeichnet, dass** der erste nichtflüchtige Speicher (10) ein Adressspeicher ist, dessen Speicherfelder einzeln adressierbar sind.

4. Gerät nach Anspruch 1, **dadurch gekennzeichnet, dass** die Speicherung der Navigationsparameter in dem ersten nichtflüchtigen Speicher (10) in vorgebbaren Zeitintervallen und/oder am Ende jedes Abspielvorganges und/oder bei jeder Veränderung der Navigationsparameter vorgesehen ist.

5. Gerät nach Anspruch 1, **dadurch gekennzeichnet, dass** das Gerät einen zweiten nichtflüchtigen Speicher (9) aufweist, der mittels der Steuerschaltung (6) steuerbar ist, dass der zweite nichtflüchtige Speicher (9) zum Speichern von Navigations-Parametern vorgesehen ist,
dass die Speicherung der Navigationsparameter in dem zweiten nichtflüchtigen Speicher (9) zusammen mit einer Informationsplattenidentifizierungsinformation erfolgt, welche eine Zuordnung der Navigations-Parameter zu der jeweiligen Informationsplatte (3) ermöglicht,
dass zu Beginn eines Abspielvorganges einer Informationsplatte (3) die dieser Informationsplatte (3) zugeordneten Navigationsparameter aus dem zweiten nichtflüchtigen Speicher (9) auslesbar sind und in den Parameter-Speicher (6a, 6b) einschreibbar sind.

6. Gerät nach Anspruch 1, **dadurch gekennzeichnet, dass** das Gerät ein DVD (Digital Video Disc) - Gerät zum Abspielen von Informationsplatten nach dem DVD-Standard ist und dass als Navigations-Parameter die Allgemeinen Parameter gemäss dem DVD-Standard für die Speicherung in dem ersten nichtflüchtigen Speicher vorgesehen sind.

7. Gerät nach Anspruch 1, **dadurch gekennzeichnet dass** das Gerät ein HQ-Video-CD (High Quality Video Compact Disc) - Gerät zum Abspielen von Informationsplatten nach dem HQ-Video-CD-Standard ist und dass als Navigations-Parameter die Benutzer-Parameter gemäss dem HQ-Video-CD-Standard für die Speicherung in dem ersten nichtflüchtigen Speicher vorgesehen sind.

8. Verwendung des Gerätes nach Anspruch 1 zur Analyse des Benutzerverhaltens von Informationsplatten-Applikationen.

9. Verwendung des Gerätes nach Anspruch 1 zur Fehlersuche in Informationsplatten-Applikationen.

## Claims

1. An apparatus for playing back information digitally stored on an optical record carrier, comprising
a control circuit (6) by means of which the reproduction of information, preferably audio and/or video information is selectable and/or controllable,
a memory for storing navigation parameters during playback of a record carrier, and
a first non-volatile memory (10) which is controllable by means of the control circuit (6), **characterized in that** the navigation parameters comprise navigation information which is stored by the apparatus during a playback process, the first non-volatile memory (10) being a serial, cyclic buffer memory in which the temporal sequences of the navigation parameters are serially written.

2. An apparatus as claimed in claim 1, **characterized in that** an interface (15) is provided for reading the temporal sequences of the navigation parameters from the first non-volatile memory (10).

3. An apparatus as claimed in claim 1, **characterized in that** the first non-volatile memory (10) is an address memory whose memory fields are individually addressable.

4. An apparatus as claimed in claim 1, **characterized in that** the navigation parameters are stored in the first non-volatile memory (10) in predeterminable time intervals and/or at the end of each playback process and/or at any change of the navigation parameters.

5. An apparatus as claimed in claim 1, **characterized in that** the apparatus comprises a second non-volatile memory (9) which is controllable by means of the control circuit (6),
**in that** the second non-volatile memory (9) is provided for storing navigation parameters,
**in that** the navigation parameters are stored together with record carrier identification information in the second non-volatile memory (9), allowing assignment of the navigation parameters to the relevant record carrier (3),
**in that**, at the start of a playback process of a record carrier (3), the navigation parameters assigned to said record carrier (3) are readable from the second non-volatile memory (9) and writable into the parameter memory (6a, 6b).

6. An apparatus as claimed in claim 1, **characterized in that** the apparatus is a DVD (Digital Video Disc) apparatus for playing back record carriers in accordance with the DVD standard, and **in that** the general parameters based on the DVD standard are provided as navigation parameters for storage in the first non-volatile memory.

7. An apparatus as claimed in claim 1, **characterized in that** the apparatus is a HQ-Video-CD (High Quality Video Compact Disc) apparatus for playing back record carriers in accordance with the HQ-Video-CD standard, and **in that** the user parameters based on the HQ-Video-CD standard are provided as navigation parameters for storage in the first non-volatile memory.

8. Use of the apparatus as claimed in claim 1, for analysis of the user behavior with regard to record carrier applications.

9. Use of the apparatus as claimed in claim 1, for error search in record carrier applications.

## Revendications

1. Appareil de lecture d'informations enregistrées numériquement sur un disque d'information optique comprenant
un circuit de commande (6) à l'aide duquel la lecture d'informations, de préférence d'informations audio et/ou vidéo peut être sélectionnée et/ou commandée,
une mémoire pour l'enregistrement de paramètres de navigation pendant la lecture d'un disque d'information et
une première mémoire non volatile (10) qui peut être commandée à l'aide du circuit de commande (6),
**caractérisé en ce que**
les paramètres de navigation contiennent des informations de navigation qui sont enregistrées par l'appareil pendant un processus de lecture, la première mémoire non volatile (10) étant conçue comme une mémoire tampon cyclique série dans laquelle des séquences temporelles des paramètres de navigation sont enregistrés en série.

2. Appareil selon la revendication 1, **caractérisé en ce qu'**une interface (15) est prévue pour la lecture des séquences temporelles des paramètres de navigation à partir de la première mémoire non volatile (10).

3. Appareil selon la revendication 1, **caractérisé en ce que** la première mémoire non volatile (10) est une mémoire d'adresse dont les zones de mémoire peuvent être adressées individuellement.

4. Appareil selon la revendication 1, **caractérisé en ce que** l'enregistrement des paramètres de navigation dans la première mémoire non volatile (10) est prévu dans des intervalles temporels à déterminer préalablement et/ou à la fin de chaque processus de lecture et/ou à chaque modification des paramètres de navigation.

5. Appareil selon la revendication 1, **caractérisé en ce que** l'appareil présente une deuxième mémoire non volatile (9) qui peut être commandée à l'aide du circuit de commande (6), que la deuxième mémoire non volatile (9) est prévue pour l'enregistrement de paramètres de navigation,
que l'enregistrement des paramètres de navigation dans la deuxième mémoire non volatile (9) est effectué avec une information d'identification des disques d'information qui permet une attribution des paramètres de navigation au disque d'information respectif (3),
qu'au début d'un processus de lecture d'un disque d'information (3), les paramètres de navigation attribués à ce disque d'information (3) peuvent être lus à partir de la deuxième mémoire non volatile (9) et enregistrés dans la mémoire de paramètres (6a, 6b).

6. Appareil selon la revendication 1, **caractérisé en ce que** l'appareil est un DVD (Digital Video Disc) pour la lecture de disques d'information selon la norme DVD et que les paramètres de navigation prévus sont les paramètres généraux conformément à la norme DVD pour l'enregistrement dans la première mémoire non volatile.

7. Appareil sera la revendication 1, **caractérisé en ce que** l'appareil est un appareil HQ-Video-CD (High Quality Video Compact Disc) pour la lecture de disques d'information selon la norme HQ Vidéo CD et que les paramètres de navigation prévus sont les paramètres d'utilisateur conformément à la norme HQ Vidéo CD pour l'enregistrement dans la première mémoire non volatile.

8. Utilisation de l'appareil selon la revendication 1 pour l'analyse du comportement de l'utilisateur d'applications de disques d'information.

9. Utilisation de l'appareil selon la revendication 1 pour la recherche d'erreurs dans des applications de disques d'information.
